# EUROPEAN PATENT SPECIFICATION

(11) **EP 0 545 369 B1**
(45) Date of publication and mention of the grant of the patent: **02.05.1997**
(21) Application number: 92120503.5
(22) Date of filing: 01.12.1992
(51) Int. Cl.: B66B 11/04, B66D 5/14, F16D 59/02, F16D 55/36

(54) **Disc brake for elevator drive sheave**
Scheibenbremse für Aufzugstriebscheibe
Frein à disque pour tambour d'entraînement d'un ascenseur

(30) Priority: 02.12.1991 US 801304; 08.01.1992 US 818316
(43) Date of publication of application: 09.06.1993
(73) Proprietor: OTIS ELEVATOR COMPANY, Farmington, CT 06032 (US)
(72) Inventor: Ericson, Richard J., Southington, Connecticut 06489 (US); Cooney, Anthony, Farmington, Connecticut 06032 (US); Lang, Michael, Bristol, Connecticut 06010 (US)
(74) Representative: Klunker . Schmitt-Nilson . Hirsch

(56) References cited:
- DE-A- 2 330 404
- GB-A- 2 236 623
- US-A- 3 695 399
- US-A- 4 509 620
- US-A- 5 156 239

## Description

This invention relates to a brake assembly of an elevator drive system according to the pre-characterizing part of any of claims 1, 8 and 9.

A brake assembly of this type is known from GB-A-2,236,623. The brake assembly is mounted on an input shaft of a reduction gear, and the sheave is mounted on the output shaft thereof.

Elevators are presently provided with a plurality of braking devices which are designed for use in normal operation of the elevator, as for example to hold the cab in place when it stops at a landing; and which are designed for use in emergency situations such as stopping the cab and/or counterweight from plunging into the hoistway pit.

The normal operational brakes on geared elevators are typically drum brakes which engage the machine input shaft to hold the latter against rotation when the cab is stopped at a floor. Elevator safeties are typically devices mounted on the car frame or counterweight assembly which are tripped by sensed overspeed of a governor cable connected to the car or counterweight. Once the safeties are tripped, they will typically grab the guide rails in the hoistway to stop the car or counterweight. The normal operating brakes described above cannot be used in emergency situations, and the elevator safeties described above are not operated in an instance where the cab is moving out of control in the upward direction in the hoistway.

Concerns as to passenger safety in an elevator car moving out of control in the upward direction in a hoistway have prompted safety code revisions in North America which mandate that elevator systems include provisions for safely stopping a runaway cab in the upward direction. These revisions have prompted research and investigation into braking systems which can provide the required function. U.S. Patent No. 4,977,982 discloses an elevator sheave brake safety which acts directly on the drive sheave to jam the latter in the case of uncontrolled upward movement of the elevator cab, whereby the cab is stopped in the hoistway. The brake safety can also stop movement of the cab away from a landing in the event that the cab doors are open. Both of these features are desirable safety features. The brake safety disclosed in this patent utilizes a pair of wedge blocks which flank the sheave and are spring-biased toward the sheave. When the safety is tripped by undesirable cab movement, the wedges will move against and jam the sheave so that it stops rotating, thereby stopping the cab. The wedging can stop the cab in both the up and down directions. U.S. Patent No. 5,007,505, discloses an elevator traction sheave brake which includes a vertically reciprocating spring-biased friction plate beneath the sheave. The friction plate is normally held away from the sheave, but during undesirable cab movement, will move upwardly to jam rotational movement of the sheave. As before, this brake can stop upward or downward movement of the cab.

Both of the aforesaid brake assemblies operate directly on the drive sheave or a part attached thereto to jam the sheave at its circumference, and can thus damage the sheave or can create a wedged engagement with the sheave that is very difficult to release. Each of these brakes also results in minimal surface contact between the sheave and the brakes whereby forces exerted on the sheave are quite concentrated, and whereby the cab will be jolted to a stop when the brakes trip.

There are several problems relating to the prior art elevator up direction safeties which remain to be solved. One problem relates to the development of a brake which can be easily retrofitted onto an existing elevator system in the field. Another problem concerns the desirability of providing maximum area contact between the brake and the drive so as to be able to provide high braking torque to the drive. The ability of the brake to be readily released, and to be able to be reused without refurbishing, and to operate with a relatively low power supply are also highly desirable. Another advantage would be to be able to utilize the emergency brake as the normal operating brake which holds the cab in place when stopped at landings. A properly designed output shaft brake mounted to the machine sheave assembly can potentially eliminate the need of an input shaft brake on geared machines, thus providing a desirable duality of function as a safety brake and also a normal machine brake.

This invention as defined in any of claims 1, 8 and 9 relates to a multi-disc brake assembly which can be incorporated into new elevator equipment; or retrofitted onto existing equipment in the field. The brake assembly is electromagnetically operated and its actuation is controlled by the conventional governor rope cab speed detector assembly, and by the cab door sensors and cab movement sensors. The brake assembly thus can be tripped in a cab overspeed (up or down) situation, and also when the cab moves away from a landing with its doors open. The geometry of the brake assembly allows the use of large brake discs, i.e., fifteen to twenty inch diameter discs, for example, which provide a large magnetic path so that high braking torque can be developed at low operating power. The large magnetic path reduces or eliminates magnetic saturation in the non-rotating metal brake discs which in turn allows a relatively large brake-actuating spring force to be used in the brake. By way of example, the brake of this invention can develop 5,200 to 8,220 Nm (3,800 to 6,000 ft. lbs.) of torque using less than one amp of current. By coupling the brake assembly with the drive sheave and output shaft, the torquing forces are spread out between the two elements, and the condition of the gears (worm gear and ring gear) or helical gear in a geared machine has no effect on the operability of the brake. Thus, were the gears to brake causing machine failure and a runaway sheave, the brake would still set and be able to stop the sheave.

### Brief Description of the Drawings

FIG. 1 is a cross-sectional view of a geared elevator machine having a preferred embodiment of a retrofitted safety brake thereon which is formed in accordance with this invention;
FIG. 2 is a side view of the output shaft extension portion of the brake assembly;
FIG. 3 is an end elevational view of the shaft extension as seen from the left hand side of FIG. 2;
FIG. 4 is an end view of the multiple disc brake assembly as seen from the left hand side of FIG. 1;
FIG. 5 is a sectional view of the disc assembly taken along Line 5-5 of FIG. 4;
FIG. 6 is a fragmented sectional view of one of the brake actuating springs in the brake assembly;
FIG. 7 is a fragmented sectional view of one of the brake plate adjustment bolts in the brake assembly;
FIG. 8 is a fragmented side elevational view of the torque arm-machine bedplate interconnection portions of the brake assembly; and
FIG. 9 is a cross-sectional view of an original equipment geared elevator machine having a preferred embodiment of a safety brake thereon which is formed in accordance with this invention.

### Best Mode For Carrying Out The Invention

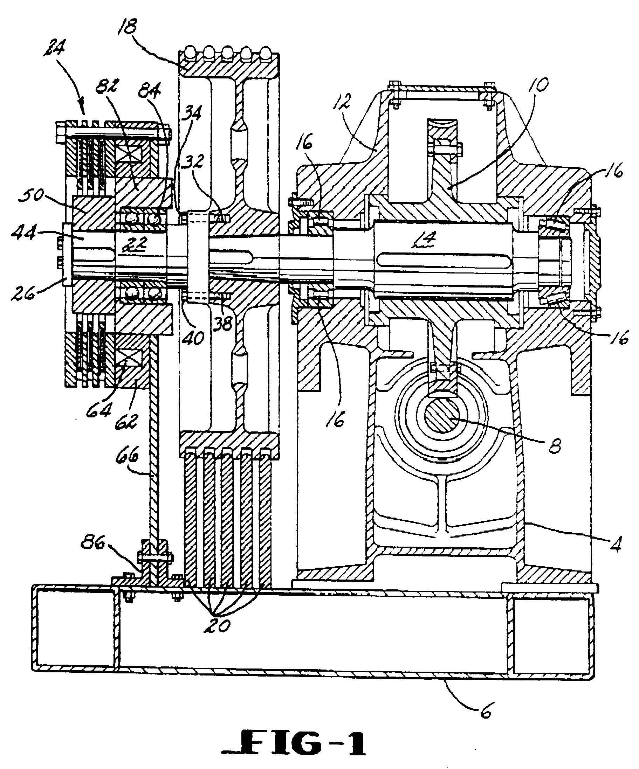

Referring now to FIG. 1, there is shown a preferred embodiment of a retrofitted multiple disc emergency brake mounted on a conventional geared elevator drive machine. The machine is denoted generally by the numeral 2 and includes a lower casing 4 which is mounted on a bedplate 6 in the machine room of the building housing the elevator. The lower casing 4 houses a worm gear 8 which meshes with a ring gear 10 mounted in an upper casing 12 of the machine 2. It will be understood that the worm gear 8 is driven by an electric motor (not shown) and in turn drives the ring gear 10. The ring gear 10 is keyed to an output shaft 14 which is journaled in bearings 16 in the upper casing 12. The elevator drive sheave 18 is mounted on and keyed to the output shaft 14 and carries the elevator cab and counterweight cables 20. The components described to this point constitute the conventional general components of a geared elevator drive assembly. It is such an assembly that is modified as follows to provide an up-down emergency braking safety feature.

An output shaft extension 22 is mounted on the output shaft 14 and the sheave 18 to form a rotating extension thereof. A multiple disc brake assembly denoted generally by the numeral 24 is mounted on the output shaft extension 22. The conventional cover plate 26 is mounted on the end of the output shaft extension 22 to hold the brake assembly 24 in place on the extension 22.

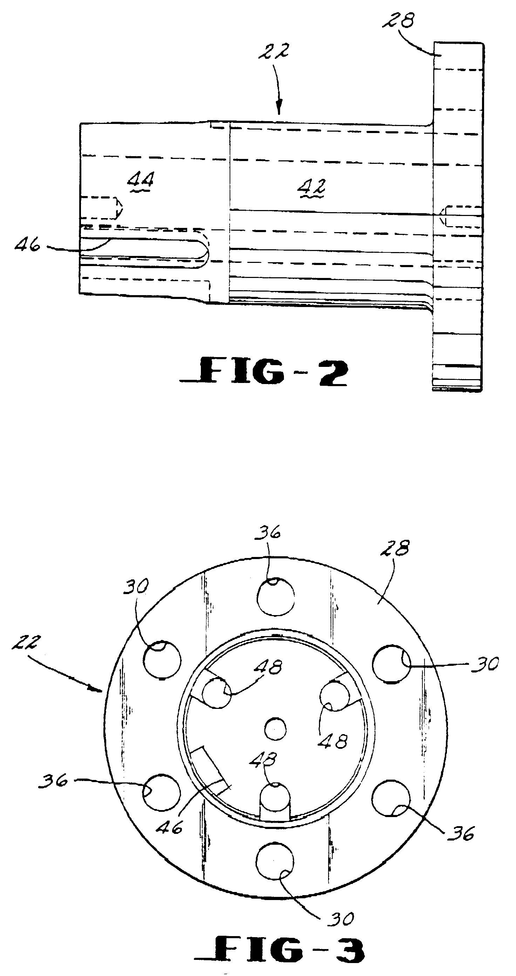

Referring to FIGS. 2 and 3, details of the output shaft extension 22 are shown. The extension 22 has an end flange 28 which faces the end of the output shaft 14 and the side of the sheave 18. The flange 28 has three holes 30 which align with existing threaded holes 32 in the sheave 18 (see FIG. 1). The existing holes 32 are normally used to mount an hydraulic pulling jack on the sheave 18 when it is necessary to remove the sheave 18 from the output shaft 14 for servicing. Bolts 34 (see FIG. 1) are passed through the holes 30 and screwed into the tapered sheave holes 32 to form a first securement of the extension 22 to the sheave 18. The flange 28 also has a second set of equispaced holes 36 which face the sheave 18 after the extension 22 is bolted thereto. The second set of flange holes 36 are then used as pilots for drilling matching holes 38 in the sheave 18 (see FIG. 1). Securement pins 40 are then pressed into the aligned holes 36, 38 to form a secondary connection between the extension 22 and the sheave 18. There are thus six torque transmitting connections between the extension flange 28 and the sheave 18.

Projecting from the flange 28 is a cylindrical boss 42 which terminates in a tapered nose 44. A key slot 46 is formed in the nose 44 for keying a part of the brake assembly to the extension 22, as will be explained in greater detail hereinafter. There are three equispaced through passages 48 drilled through the boss 42 and nose 44. These passages 48 are aligned with standard tapped holes in the end of the output shaft 14 which normally receive bolts used to secure the cover plate 26 to the end of the output shaft 14 in a standard machine that has not been fitted with the emergency safety brake of this invention. Appropriately sized bolts or threaded studs are passed through the cover plate 26 and the passages 48 and are screwed into the preexisting tapped holes in the output shaft 14. In this manner a direct connection between the extension 22 and the output shaft 14 is made. These fasteners provide a reaction onto the face of the drive sheave, which forces the sheave backward on its taper and thus holds it tightly in place. It will be noted that there are in all nine connections between the extension 22 and the sheave/output shaft combination. This ensures safe transmittal of torque between the respective parts of the drive and brake assembly.

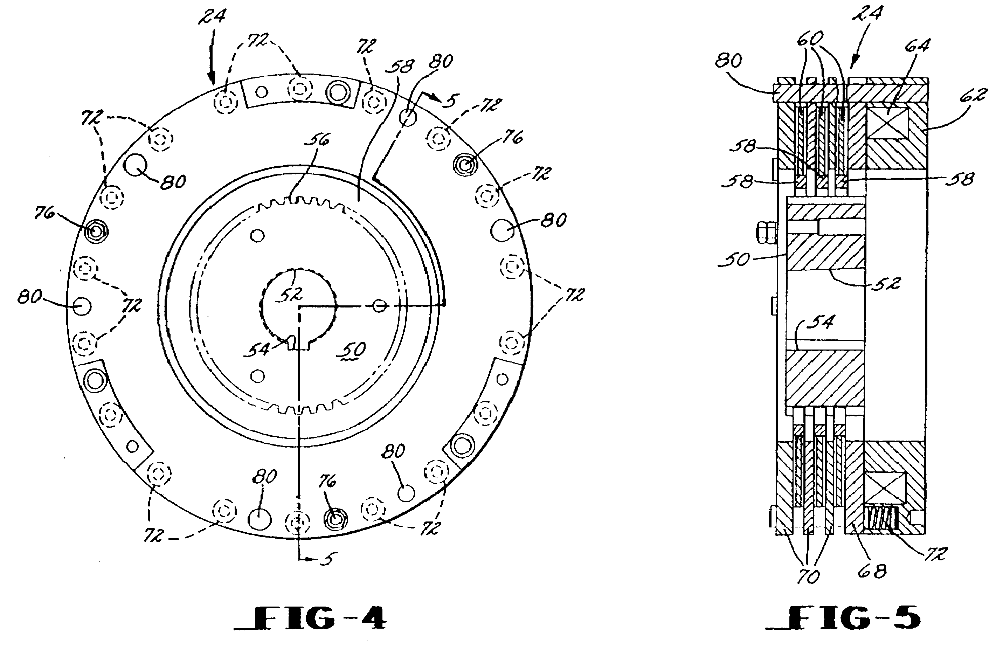

Referring now to FIGS. 1, 4 and 5, details of the brake assembly 24 are shown. As most clearly shown in FIGS. 4 and 5, the brake assembly 24 includes a central hub 50 which has a through tapered passage 52 with a key slot 54. The hub 50 is fitted onto the extension nose 44 and keyed thereto for rotation therewith. It will be noted from FIG. 1 that the plate 26 jams the hub 50 on the extension nose 44. Referring back to FIG. 4, the outer circumferential surface of the hub 50 is formed with splines 56 so as to be fitted with a plurality of internally splined friction discs 58 of a suitable number, depending on the amount of braking torque which is required in each application. Each of the discs 58 carries an annular radially outwardly extending friction pad 60. It will be appreciated from the above, that the hub 50, discs 58 and pads 60 all rotate with the output shaft 14 and sheave 18.

The brake assembly 24 also includes a magnet assembly 62 having a coil 64, and which is mounted on a torque arm 66 (See FIG. 1). An armature plate 68 is disposed adjacent to the magnet assembly 62, followed by a series of annular brake plates 70. It will be noted that the friction disc 60 and brake plates 70 are interleaved. The armature plate 68 is biased away from the magnet assembly 62 by a plurality of coil springs 72, and the brake plates 70 are biased apart by a plurality of light coil springs 74 mounted on bolts 76 which extend through the armature plate 68 and the brake plates 70. The brake plates 70 are thus held away from the interleaving friction discs 60 by the coil springs 74 when the brake assembly is "off". Nuts 78 are threaded onto the ends of the bolts 76 to allow for adjustment of the spacing between the plates 70 to account for wear on the brake during its useful life. A plurality of guide dowels 80 dispersed circumferentially about the brake assembly 24 extend through the magnet assembly 62, and the armature plate 68 and brake plates 70 to guide axial movement of these components relative to each other when the brake is set and released.

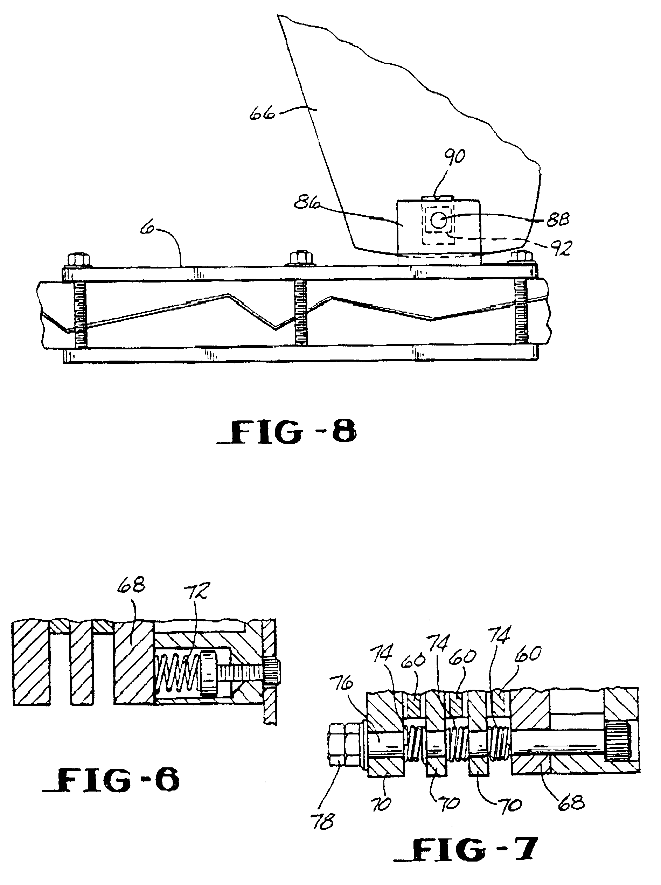

Referring back to FIG. 1, it will be noted that the magnet assembly 62 is mounted on a sleeve 82 which in turn is mounted on the outer race of a ball bearing 84 assembly. The sleeve 82 passes through and is fixed to the torque arm 66. It will be appreciated from the above that the discs 60 rotate with the output shaft 14 and sheave 18, while the plates 70 remain relatively stationary. The torque arm 66 is connected to the bedplate 6 by means of a clevis 86 bolted to the bedplate 6, and a transverse pin 88 which passes through the torque arm 66 and clevis 86. FIG. 8 shows details of the connection between the torque arm 66 and the bedplate 6. The torque arm 66 has a rectangular opening 90 cut therein through which the pin 88 passes. A hardened steel plaque 92 is mounted on the pin 88 and positioned within the torque arm opening 90. The plaque 92 is aller than the opening 90 so that the torque arm 66 can undergo limited movement at its lower end within the clevis 86. This limited movement will allow for a normal degree of wobble of the output shaft extension 22 without interfering with normal operation of the drive.

The emergency brake assembly described above operates as follows. During normal safe operation of the elevator the coil 64 is energized, and the armature plate 68 is magnetically held against the magnet assembly 62 causing the actuating springs 72 to be compressed. The brake assembly 24 is thus in a "release" mode, and the friction discs 60 will be free to rotate with the extension 22, uninhibited by the plates 70. In the event of an unsafe operating episode, such as overspeed in either direction, or door-open movement of the cab away from a landing, power to the coil 64 will be switched off, and the coil 64 will deenergize. The actuating springs 72 will then move the armature plate 68 away from the magnet assembly 62 and toward the annular bake plates 70. The force of the springs 72 is such that the spacer springs 74 will be compressed and the plates 70 will clamp the discs 60 against further movement. This will move the torque arm 66 into locked engagement with the clevis 86 and bedplate 6. Movement of the output shaft 14 and sheave 18 will thus be interrupted and the cab will stop its movement in the hoistway. At the same time, power to the machine may be interrupted. After the cause of the unsafe cab movement has been discovered, the brake assembly 24 can be released merely by restoring power to the coil 64.

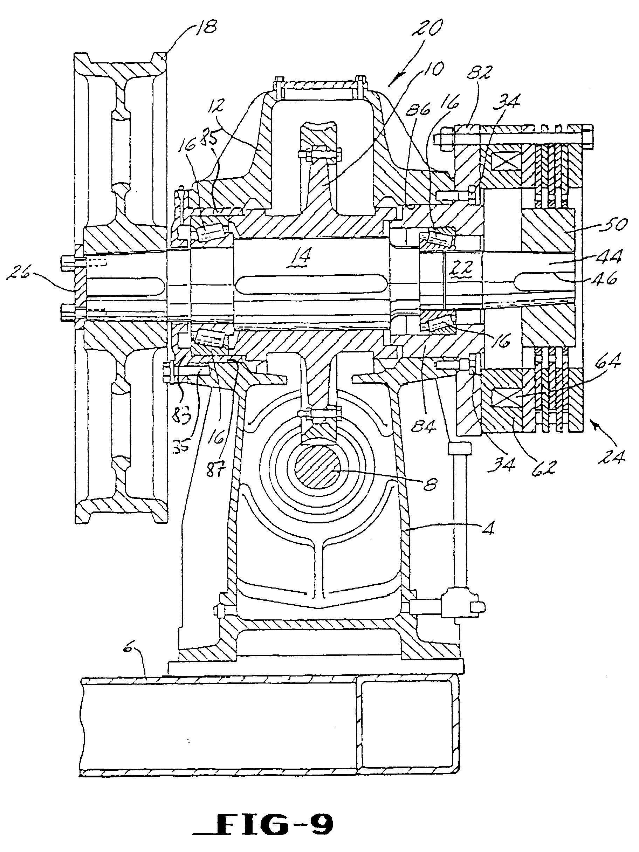

Referring now to FIG. 9, there is shown a preferred embodiment of a multiple disc emergency brake mounted on an original equipment conventional geared elevator drive machine. The machine is denoted generally by the numeral 20 and includes a lover casing 4 which is mounted on a bedplate 6 in the machine room of the building housing the elevator. The lower casing 4 houses a worm gear 8 which meshes with a ring gear 10 mounted in an upper casing 12 of the machine 2. It will be understood that the worm gear 8 is driven by an electric motor (not shown) and in turn drives the output shaft gear 10. The output shaft gear 10 is mounted directly to the output shaft 14 or to a spyder which is journaled in bearings 16 in the upper casing 12. The elevator drive sheave 18 is mounted on and keyed to the output shaft 14. The cover plate 26 is mounted on an end of the output shaft 14 to hold the sheave 18 in place on the shaft 14. The components described to this point constitute the conventional general components of a geared elevator drive assembly.

An output shaft extension 22 is formed on the output shaft 14 to form a rotating extension thereof. A multiple disc brake assembly denoted generally by the numeral 24 is mounted on a tapered nose portion 44 of the output shaft extension 22. A key slot 46 is formed in the nose 44 for keying a part of the brake assembly to the extension 22, as will be explained in greater detail hereinafter.

As seen in FIG. 9, the brake assembly 24 includes a base plate 82 which is bolted to the machine housing 4, 12 by bolts 34. The plate 82 has a boss 84 telescoped into a counterbore 86 in the housing 4, 12. A closure plate 83 having a boss 85 extending into counterbore 87 closes the other end of the casing 4, 12. The plate 83 is bolted to the casing 4, 12 by bolts 35. The counter-bores 86 and 87 and bosses 84 and 85 are eccentric with respect to the axis of rotation of the output shaft 14 thereby allowing both backlash adjustment of the gear mesh if both the eccentric covers 82 and 83 are rotated equally and in the same direction, or horizontal shifting of the contact pattern of the gear teeth if the covers are rotated in opposite directions, to correct for numerous possible minor machining errors. The process of mounting worm gear or helical gear output shafts on eccentric covers to correct gear mesh patterns is well known to those skilled in the art. Excessive backlash creates car leveling problems, whereas insufficient backlash can jamb the mesh due to thermal expansion of the gears while running.

The first problem that this invention solves is how to allow for moving the geometric position of the output shaft relative to the input shaft while keeping the brake concentric to the output shaft, regardless of its gear mesh adjustment setting. As most clearly shown in FIGS. 2 and 3, the brake assembly 24 includes a central hub 50 which has a through tapered passage 52 with a key slot 54. The hub 50 is fitted onto the extension nose 44 and keyed thereto for rotation therewith. The outer circumferential surface of the hub 50 is formed with splines 56 so as to be fitted with a plurality of internally splined friction discs 58 of a suitable number, depending on the amount of braking torque which is required in each application. Each of the discs 58 carries an annular radially outwardly extending friction pad 60. It will be appreciated from the above, that the hub 50, discs 58 and pads 60 all rotate with the output shaft 14 and sheave 18.

The second problem that this invention solves is how to provide a highly accurate and flat surface for the brake torque to react against, without the need to extensively machine, modify, or redesign the gearbox housing (casting). The plate 82 can also be applied to a fixed center gearbox, which does not require any eccentric adjustment due to smaller center distances or highly accurate machining of the gears and gearbox housing 4. Some newer design elevator machines under development by Otis Elevator Company are of the fixed center distance type, relying on gear alignment solely on the basis of highly accurate machining of the gearbox parts. In this case the side wall of the gearbox housing is not satisfactory for bolting on the disc brake assembly because of its irregular shape and dimensional inaccuracies. The illustrated mounting technique minimizes machining of the gearbox by use of the machined plate 82 and mounting bolts 34. In this way the need to provide a flat machined surface on the side of the gearbox housing 4 is minimized.

The brake assembly of this invention can generate high torque braking forces without damaging components of the elevator drive, and can be operated with a very small current power supply. The loose fitting between the torque arm and bedplate allows for normal wobble of the brake assembly on the sheave, and relaxes installation parameters. While the brake assembly has been described herein as an emergency safety brake, it will be readily appreciated that it could also be used as the normal cab holding brake when the cab is stopped at landings to allow normal passenger traffic between the cab and landings. Likewise, it will be readily apparent that the brake assembly's utility is not limited to geared elevator machines, but can also be used in conjunction with a gearless elevator system.

Since many changes and variations of the preferred embodiment of this invention may be made without departing from the inventive concept, it is not intended to limit the invention otherwise than as required by the appended claims.

## Claims

1. A brake assembly of an elevator drive system which includes a drive machine having a shaft (14) and a sheave (18), a plurality of hoist cables reeved over the sheave (18), and wherein the drive machine (2) is fixed to a bedplate (6), comprising:
friction disc means (58) coupled to and rotatable with said shaft (14);
brake plate means (70) journaled and fixed against rotation of said shaft (14), said friction disc means (58) being interposed between components of said brake plate means (70); and
actuating means (62-68) for selectively causing said brake plate means (70) to clamp said friction disc means (58) against rotation thereby selectively stopping rotation of said shaft (14) and sheave (18),
characterized in that
said shaft is the output shaft (14) of said drive machine, the sheave (18) being mounted on said output shaft (14),
a generally cylindrical extension (22) is removably secured to at least one of said output shaft (14) and said sheave (18), said extension (22) being generally coaxial with said output shaft (14) and disposed on a side of said sheave (18) opposite said output shaft (14);
that said friction disc means (58) is mounted on said extension (22) and rotatable therewith, and that said brake plate means (70) is journaled on said extension (22) and fixed against rotation.

2. The assembly of claim 1 wherein said brake plate means (70) is operably connected to said bedplate (6) by a torque arm (66).

3. The assembly of claim 2 wherein said torque arm (66) is loosely connected to said bedplate (6) to accommodate limited rotational wobble of said extension (22) and resultant vibration of said brake plate means (70) without interfering with rotation of said output shaft (14) and sheave (18).

4. The assembly of any one of claims 1 to 3 wherein said friction disc means (58) and said brake plate means (70) comprise a plurality of friction discs associated with sandwiching pairs of brake plates.

5. The assembly of claims 1 to 4 wherein said actuating means comprises an electromagnetic actuator (62) for holding said brake plate means (70) components in a spread condition, and spring means (72) biasing said brake plate means (70) components toward disc clamping positions.

6. The assembly of claims 1 to 5 wherein said extension (22) is connected to said output shaft (14) and to said sheave (18).

7. The assembly of claims 1 to 6 wherein said brake plate means (70) are journaled on said extension (22) by roller bearings.

8. An elevator drive system having a drive machine with rotating output shaft and a sheave (18) fixed to said output shaft (14) for concurrent rotation with the latter, and a plurality of hoisting cables reeved over said sheave (18), said machine being fixed to a bedplate (6), and said drive system further comprising a friction disc means (58) mounted on a shaft for rotation therewith;
brake plate means (70) journaled on a shaft and fixed against rotation, said friction disc means being interposed between components of said brake plate means; and
actuating means (62-68) for selectively causing said brake plate means (70) to clamp said friction disc means (58) against rotation thereby selectively stopping rotation of said output shaft (14) and sheave (18) so as to stop further movement of the hoisting cables so long as said friction disc means (58) remains clamped,
characterized in that
said friction disc means (58) are mounted on the output shaft (14) of the drive machine and the brake plate means (70) are journaled on the output shaft (14).

9. A brake assembly of an elevator drive system which includes a drive machine having a shaft (14) mounted in a casing (4), a sheave mounted on said output shaft (14), and a plurality of hoist cables reeved over the sheave (18), and wherein the drive machine casing (4, 12) is fixed to a bedplate (6), a brake assembly comprising:
a) friction disc means (58) operably connected to and rotatable with said shaft;
b) brake plate means (70) mounted on said casing (4, 12) and fixed against rotation thereon, said friction disc means (58) being interposed between components (60) of said brake plate means (58); and
c) actuating means (62-68) for selectively causing said brake plate means (70) to clamp said friction disc means (58) against rotation thereby selectively stopping rotation of said output shaft (14) and sheave (18),
characterized in that said friction disc means (58) are connected to the output shaft (14) of the drive machine, said output shaft (14) includes a generally cylindrical extension (22) formed on the end thereof distal of said sheave (18), said extension protruding from said casing (4), said friction disc means (58) being mounted on said extension (22).

10. The assembly of claim 9, wherein said brake plate means (70) are secured to a plate (82) which is bolted to said machine casing (4, 12).

11. The assembly of claim 10, wherein said plate (82) includes a circular boss (84) which extends into a counterbore (86) in said casing (4, 12) which counterbore (86) surrounds said output shaft (14).

12. The assembly of claim 11, whereby said output shaft (14) is concentric with and jounaled in a bore in said boss (84).

13. The assembly of claim 11 or 12, wherein said boss (84) and said counterbore (86) are eccentric relative to each other.

## Patentansprüche

1. Bremsanordnung eines Aufzugsantriebssystems, das eine Antriebsmaschine mit einer Welle (14) und eine Seilscheibe (18) sowie eine Anzahl von über die Seilscheibe (18) geführten Aufzugsseilen aufweist und bei dem die Antriebsmaschine (2) an einer Bettplatte (6) befestigt ist, wobei die Bremsanordnung folgendes aufweist:
eine Reibungsscheibeneinrichtung (58), die mit der Welle (14) gekoppelt ist und zusammen mit dieser drehbar ist;
eine Bremsplatteneinrichtung (70), die gelagert und gegen Rotation der Welle (14) festgelegt ist, wobei die Reibungsscheibeneinrichtung (58) zwischen Komponenten der Bremplatteneinrichtung (70) angeordnet ist; und
eine Betätigungseinrichtung (62 bis 68) zum selektiven Veranlassen der Bremsplatteneinrichtung (70) zum Festklemmen der Reibungsscheibeneinrichtung (58) gegen Rotation, um dadurch die Rotation der Welle (14) und der Seilscheibe (18) selektiv zu stoppen,
**dadurch gekennzeichnet,**
daß es sich bei der Welle um die Ausgangswelle (14) der Antriebsmaschine handelt, wobei die Seilscheibe (18) auf der Ausgangswelle (14) angebracht ist,
daß ein allgemein zylindrischer Fortsatz (22) an der Ausgangswelle (14) und/oder der Seilscheibe (18) lösbar befestigt ist, wobei der Fortsatz (22) allgemein koaxial mit der Ausgangswelle (14) sowie auf einer der Ausgangswelle (14) entgegengesetzten Seite der Seilscheibe (18) angeordnet ist;
daß die Reibungsscheibeneinrichtung (58) auf dem Fortsatz (22) angebracht ist und zusammen mit diesem drehbar ist,
und daß die Bremsplatteneinrichtung (70) auf dem Fortsatz (22) gelagert ist und gegen Rotation festgelegt ist.

2. Anordnung nach Anspruch 1,
wobei die Bremsplatteneinrichtung (70) durch einen Drehmomentarm (66) mit der Bettplatte (6) betriebsmäßig verbunden ist.

3. Anordnung nach Anspruch 2,
wobei der Drehmomentarm (66) mit der Bettplatte (6) lose verbunden ist, um einer begrenzten rotationsmäßigen Bewegungsschwankung des Fortsatzes (22) und einer resultierenden Vibration der Bremsplatteneinrichtung (70) Rechnung zu tragen, ohne daß dabei eine Beeinträchtigung der Rotation der Ausgangswelle (14) und der Seilscheibe (18) entsteht.

4. Anordnung nach einem der Ansprüche 1 bis 3,
wobei die Reibungsscheibeneinrichtung (58) und die Bremsplatteneinrichtung (70) eine Anzahl von Reibungsscheiben, zugeordnet Paaren von Sandwich-Anordnung erbringenden Bremsplatten, aufweisen.

5. Anordnung nach einem der Ansprüche 1 bis 4,
wobei die Betätigungseinrichtung einen elektromagnetischen Betätiger (62) zum Halten der Komponenten der Bremsplatteneinrichtung (70) in einem auseinandergespreizten Zustand sowie eine Federeinrichtung (72) zum Vorspannen der Komponenten der Bremsplatteneinrichtung (70) in Richtung auf Scheibenklemmpositionen aufweist.

6. Anordnung nach Ansprüchen 1 bis 5,
wobei der Fortsatz (22) mit der Ausgangswelle (14) und der Seilscheibe (18) verbunden ist.

7. Anordnung nach Ansprüchen 1 bis 6,
wobei die Bremsplatteneinrichtung (70) auf dem Fortsatz (22) durch Rollenlager gelagert ist.

8. Aufzugsantriebssystem mit einer Antriebsmaschine mit rotierender Ausgangswelle und mit einer auf der Ausgangswelle (14) befestigten Seilscheibe (18) zur gleichzeitigen Rotation mit dieser und mit einer Anzahl von Aufzugsseilen, die über die Seilscheibe (18) geführt sind, wobei die Maschine an einer Bettplatte (6) festgelegt ist und wobei das Antriebssystem ferner eine Reibungsscheibeneinrichtung (58) aufweist, die auf einer Welle zur Ausführung einer Rotationsbewegung zusammen mit dieser angebracht ist;
mit einer Bremsplatteneinrichtung (70), die auf einer Welle gelagert ist und gegen Rotation festgelegt ist, wobei die Reibungsscheibeneinrichtung zwischen Komponenten der Bremsplatteneinrichtung angeordnet ist; und
mit einer Betätigungseinrichtung (62 bis 68) zum selektiven Veranlassen der Bremsplatteneinrichtung (70) zum Festklemmen der Reibungsscheibeneinrichtung (58) gegen Rotation, um dadurch die Rotation der Ausgangswelle (14) und der Seilscheibe (18) selektiv zu stoppen, um dadurch eine weitere Bewegung der Aufzugsseile zu stoppen, solange die Reibungsscheibeneinrichtung (58) festgeklemmt bleibt,
**dadurch gekennzeichnet,**
daß die Reibungsscheibeneinrichtung (58) auf der Ausgangswelle (14) der Antriebsmaschine angebracht ist und die Bremsplatteneinrichtung (70) auf der Ausgangswelle (14) gelagert ist.

9. Bremsanordnung eines Aufzugsantriebssystems, das eine Antriebsmaschine mit einer in einem Gehäuse (4) angeordneten Welle (14), eine auf der Ausgangswelle (14) angebrachte Seilscheibe sowie eine Anzahl von über die Seilscheibe (18) geführten Aufzugsseilen aufweist, und wobei das Antriebsmaschinengehäuse (4,12) an einer Bettplatte (6) festgelegt ist, wobei die Bremsanordnung folgendes aufweist:
a) eine Reibungsscheibeneinrichtung (58), die mit der Welle betriebsmäßig verbunden und zusammen mit dieser drehbar ist;
b) eine Bremsplatteneinrichtung (70), die an dem Gehäuse (4,12) angebracht ist und gegen Rotation an diesem festgelegt ist, wobei die Reibungsscheibeneinrichtung (58) zwischen Komponenten (60) der Bremsplatteneinrichtung (58) angeordnet ist;
c) eine Betätigungseinrichtung (62 bis 68) zum selektiven Veranlassen der Bremsplatteneinrichtung (70) zum Festklemmen der Reibungsscheibeneinrichtung (58) gegen Rotation, um dadurch die Rotation der Ausgangswelle (14) und der Seilscheibe (18) selektiv zu stoppen,
**dadurch gekennzeichnet,**
daß die Reibungsscheibeneinrichtung (58) mit der Ausgangswelle (14) der Antriebsmaschine verbunden ist, wobei die Ausgangswelle (14) einen allgemein zylindrischen Fortsatz (22) aufweist, der an ihrem von der Seilscheibe (18) entfernten Ende ausgebildet ist, wobei der Fortsatz von dem Gehäuse (4) wegragt, und wobei die Reibungsscheibeneinrichtung (58) auf dem Fortsatz (22) angebracht ist.

10. Anordnung nach Anspruch 9,
wobei die Bremsplatteneinrichtung (70) an einer Platte (82) befestigt ist, die an das Maschinengehäuse (4,12) angeschraubt ist.

11. Anordnung nach Anspruch 10,
wobei die Platte (82) eine kreisförmige Erhebung (84) aufweist, die sich in eine Senkbohrung (68) in dem Gehäuse (4,12) hineinerstreckt, wobei die Senkbohrung (86) die Ausgangswelle (14) umgibt.

12. Anordnung nach Anspruch 11,
wobei die Ausgangswelle (14) in einer Bohrung der Erhebung (84) gelagert ist und konzentrisch mit dieser ist.

13. Anordnung nach Anspruch 11 oder 12,
wobei die Erhebung (84) und die Senkbohrung (86) relativ zueinander exzentrisch sind.

## Revendications

1. Ensemble de freinage pour un système d'entraînement d'ascenseur qui comprend une machine d'entraînement possédant un arbre (14) et une poulie (18), une pluralité de câbles de levage passant sur la poulie (18), et dans lequel la machine d'entraînement (2) est fixée à une assise (6), comprenant :
des moyens de disque de friction (58) reliés audit arbre (14) et pouvant tourner avec ce dernier ;
des moyens de plaque de freinage (70) montés et fixés par rapport à la rotation dudit arbre (14), lesdits moyens de disque de friction (58) étant interposés entre des composants desdits moyens de plaque de freinage (70) ; et
des moyens d'actionnement (62 à 68) pour amener sélectivement lesdits moyens de plaque de freinage (70) à serrer lesdits moyens de disque de friction (58) contre la rotation, ce qui arrête sélectivement la rotation dudit arbre (14) et de ladite poulie (18),
caractérisé en ce que
ledit arbre est l'arbre de sortie (14) de ladite machine d'entraînement, la poulie (18) étant montée sur ledit arbre de sortie (14),
une extension sensiblement cylindrique (22) est fixée, de façon amovible, au moins à l'un dudit arbre de sortie (14) et de ladite poulie (18), ladite extension (22) étant sensiblement coaxiale audit arbre de sortie (14) et disposée sur un côté de ladite poulie (18) opposé audit arbre de sortie (14) ;
lesdits moyens de disque de friction (58) sont montés sur ladite extension (22) et peuvent tourner avec cette dernière, et lesdits moyens de plaque de freinage (70) sont montés sur ladite extension (22) et sont fixés par rapport à la rotation.

2. Ensemble selon la revendication 1, dans lequel lesdits moyens de plaque de freinage (70) sont reliés opérationnellement à ladite assise (6) par un bras de torsion (66).

3. Ensemble selon la revendication 2, dans lequel ledit bras de torsion (66) est relié de façon lâche à ladite assise (6) pour s'accommoder à l'oscillation rotative limitée de ladite extension (22) et aux vibrations résultantes desdits moyens de plaque de freinage (70) sans interférer avec la rotation dudit arbre de sortie (14) et de ladite poulie (18).

4. Ensemble selon l'une quelconque des revendications 1 à 3, dans lequel lesdits moyens de disque de friction (58) et lesdits moyens de plaque de freinage (70) comprennent une pluralité de disques de friction associés à des couples de plaques de freinage qui les prennent en sandwich.

5. Ensemble selon les revendications 1 à 4, dans lequel lesdits moyens d'actionnement comprennent un dispositif d'actionnement électromagnétique (62) pour maintenir les composants desdits moyens de plaque de freinage (70) dans un état écarté, et des moyens de ressort (72) sollicitant lesdits composants vers les positions de serrage des disques.

6. Ensemble selon les revendications 1 à 5, dans lequel ladite extension (22) est reliée audit arbre de sortie (14) et à ladite poulie (18).

7. Ensemble selon les revendications 1 à 6, dans lequel lesdits moyens de plaque de freinage (70) sont montés sur ladite extension (22) par des roulements à rouleaux.

8. Système d'entraînement d'ascenseur comprenant une machine d'entraînement munie d'un arbre de sortie rotatif et d'une poulie (18) fixée audit arbre de sortie (14) pour tourner simultanément avec ce dernier, et une pluralité de câbles de levage passant sur ladite poulie (18), ladite machine étant fixée à une assise (6), et ledit système d'entraînement comprenant de plus des moyens de disque de friction (58) montés sur un arbre pour tourner avec ce dernier ;
des moyens de plaque de freinage (70) montés sur un arbre et fixés par rapport à la rotation,
lesdits moyens de disque de friction étant interposés entre des composants desdits moyens de plaque de freinage ; et
des moyens d'actionnement (62 à 68) pour amener sélectivement lesdits moyens de plaque de freinage (70) à serrer lesdits moyens de disque de friction (58) par rapport à la rotation, ce qui arrête sélectivement la rotation dudit arbre de sortie (14) et de ladite poulie (18) et arrête tout mouvement supplémentaire des câbles de levage aussi longtemps que lesdits moyens de disque de friction (58) restent serrés,
caractérisé en ce que
lesdits moyens de disque de friction (58) sont montés sur l'arbre de sortie (14) de la machine d'entraînement et les moyens de plaque de freinage (70) sont montés sur l'arbre de sortie (14).

9. Ensemble de freinage d'un système d'entraînement d'ascenseur qui comprend une machine d'entraînement possédant un arbre (14) monté dans un carter (4), une poulie montée sur ledit arbre de sortie (14), et une pluralité de câbles de levage passant sur la poulie (18), et dans lequel le carter de la machine d'entraînement (4, 12) est fixée à une assise (6), l'ensemble de freinage comprenant :
a) des moyens de disque de friction (58) reliés opérationnellement audit arbre et pouvant tourner avec ce dernier ;
b) des moyens de plaque de freinage (70) montés sur ledit carter (4, 12) et fixes sur ce dernier par rapport à la rotation, lesdits moyens de disque de friction (58) étant interposés entre des composants (60) desdits moyens de plaque de freinage (70) ; et
c) des moyens d'actionnement (62 à 68) pour amener sélectivement lesdits moyens de plaque de freinage (70) à serrer lesdits moyens de disque de friction (58) par rapport à la rotation, ce qui arrête sélectivement la rotation dudit arbre de sortie (14) et de ladite poulie (18),
caractérisé en ce que lesdits moyens de disque de friction (58) sont reliés à l'arbre de sortie (14) de la machine d'entraînement, ledit arbre de sortie (14) comprend une extension sensiblement cylindrique (22) formée sur l'extrémité de ce dernier éloignée par rapport à ladite poulie (18), ladite extension dépassant dudit carter (4), lesdits moyens de disque de friction (58) étant montés sur ladite extension (22).

10. Ensemble selon la revendication 9, dans lequel lesdits moyens de plaque de freinage (70) sont fixés à une plaque (82) qui est boulonnée audit carter de machine (4, 12).

11. Ensemble selon la revendication 10, dans lequel ladite plaque (82) comprend une protubérance circulaire (84) qui s'étend dans un contre-alésage (86) dans ledit carter (4, 12), lequel contre-alésage (86) entoure ledit arbre de sortie (14).

12. Ensemble selon la revendication 11, dans lequel ledit arbre de sortie (14) est concentrique à un alésage dans ladite protubérance (84) et est monté tourillonnant dans cet alésage.

13. Ensemble selon la revendication 11 ou 12, dans lequel ladite protubérance (84) et ledit contre-alésage (86) sont excentriques l'un par rapport à l'autre.
